# EUROPEAN PATENT SPECIFICATION

(11) **EP 2 479 731 B1**
(45) Date of publication and mention of the grant of the patent: **23.09.2015**
(21) Application number: 11290024.6
(22) Date of filing: 18.01.2011
(51) Int. Cl.: G07F 17/00, G07F 15/04, G07F 15/00, G07C 9/00

(54) **User/vehicle-ID associating access rights and privileges**
Zugangsrechte und Privilegien durch Benutzer/Fahrzeug-Identifizierung
Identifiant de véhicule/utilisateur associant des droits et privilèges d'accès

(43) Date of publication of application: 25.07.2012
(73) Proprietor: ALCATEL LUCENT, 92100 Boulogne-Billancourt (FR)
(72) Inventor: Templ, Wolfgang, 74372 Sersheim (DE); Kopp, Dieter, 75428 Illingen (DE)
(74) Representative: Wetzel, Emmanuelle

(56) References cited:
- EP-A1- 2 273 462
- WO-A1-99/40544
- DE-A1-102007 003 912
- FR-A1- 2 931 314
- GB-A- 2 438 979
- US-A1- 2010 274 690

## Description

### TECHNICAL FIELD

The present application relates to a user/vehicle-identification (ID) by which access rights and privileges can be associated to a user of a specific vehicle. In particular, the application relates to using a user/vehicle-ID stored in a car key remote control for associating access rights, privileges and/or user settings which have a relation to the vehicle, identified by the vehicle ID, to the user of the car key remote control.

### BACKGROUND

For e-car charging, several solutions for controlling the charging operation are under discussion. GB2438979 and WO99/40544 are describing such charging system. However, they all suffer from various draw backs.

For example, direct payment by cash or credit card involves a high effort at the charging station as it requires a coin-operated machine or a credit card reader. Furthermore, it induces high safety risks such as burglary, robbery or vandalism and requires additional maintenance efforts.

Moreover, a plain cash payment method does not allow for individual tariffing, as it does not allow identifying the tariff to which a person being charged has subscribed. Accordingly, e-car charging with individual tariffing requires a personal identification of the person being charged, for example over an identification card or a personal radio frequency identification (RFID) device.

Although the use of RFID devices is known in the car industry, e.g. the remote control of the car door opening and an anti-theft system, personal RFID related identification involves an additional RFID device which needs to be carried by the person being charged. Hence, RFID identification induces the risk of loss and damage to the RFID device and lack of flexibility.

Hence, drivers of a car currently identify themselves over car-independent devices such as ID cards upon which information relating to the owner of the device is encoded. With regard to the above example of e-car charging, a user of a car would be charged according to a tariff which is associated to his/her user ID combined with the vehicle ID on his/her ID card.

Another example of a driver of a car identifying himself/herself over a car-independent device would be an employee of a company who is allowed to access certain areas of business premises by opening a gate using his/her ID card.

A general problem with ID cards is that they, like RFID devices, need to be carried by the person being identified. Hence, each additional ID card induces the risk of loss and damage to the ID card. Furthermore, when the ID card does not allow for modifying information stored on the ID card or storing additional information on the ID card, the identification procedure may be inefficient and generally lack flexibility.

A more specific problem with ID cards is that they can be easily swapped between users so that it is not ensured that the person using the ID card is also the owner of the ID card and therefore entitled to the privileges associated to the user ID encoded on the ID card.

### SUMMARY

The present application presents a flexible solution to the above recited problems involving the modified code of the car key remote control for identification of a driver and vehicle in order to associate access rights and privileges to the user of the car key remote control.

According to an aspect, the driver may send with the car key an identification code for example over a human machine interface (HMI), to an authentication device. The code may be used for an identification and authentication process at a verification system. The code may comprise or may consist of an individual personal identification code of the driver and a vehicle identification code (remote key control).

Generally speaking, an aspect of the description relates to a system for authentication of a person and an entity, wherein the person has a relation to the entity. The system may comprise an ID device and an authentication device. The ID device may be adapted to store information about a person and an entity. The information may comprise a person ID and an entity ID or person/entity ID, e.g. in the form of strings. The person ID may identify the person and the entity ID may identify the entity. The authentication device may be adapted to receive the person ID and the entity ID, or the person/entity ID from the ID device and associate access rights, privileges and/or user settings to the person, when the person ID and the entity ID or the person/entity ID has/have been verified. Thus, a person is associated to an entity over the person ID and the entity ID, or the person/entity ID. Alternatively, instead of one entity, a plurality of entities may be associated to the person, e.g. by use of a person ID and a plurality of entity IDs, or a person/plurality of entities ID. Similarly, instead of associating the person to an entity or a plurality of entities, the person may be associated to a person or a plurality of persons, e.g. over a first person ID and a second person ID, or a person/person ID or a first person ID and a plurality of further person IDs, or a person/plurality of persons ID.

In specific scenarios, a user of a vehicle may be associated to the vehicle.

Accordingly, an aspect of the description relates to a system for authentication of a user of a vehicle. The system may comprise an ID device and an authentication device.

The ID device may be configured to store information identifying the user and the vehicle, e.g. a user ID and a vehicle ID or a user/vehicle ID, e.g. in the form of symbol strings. The user ID and the vehicle ID or the user/vehicle ID may identify the user of the vehicle and the vehicle.

For example, the user ID and the vehicle ID or user/vehicle ID may comprise a predetermined number of symbols, i.e. characters and numbers, which uniquely identify the user and the vehicle. Each ID string may comprise the predetermined number of symbols in encrypted form. Heretofore, the ID device may have access to a public key for encrypting the predetermined number of symbols which uniquely identify the user and the vehicle. Alternatively, the ID device may store the predetermined number of symbols which have been encrypted by an entity other than the ID device. For example, the ID device may comprise an RFID device comprising a memory upon which the other entity stores the ID string comprising the predetermined number of symbols in encrypted form.

Alternatively, the other entity may store the predetermined number of symbols in the memory of the ID device and the ID device may encrypt the predetermined number of symbols and thus, generate the user/vehicle ID string. The ID device may comprise the user/vehicle ID string as one string.

Alternatively, the ID device may comprise the user/vehicle ID in the form of two strings, i.e. a user ID string and a vehicle ID string. At least one of the user ID string and the vehicle ID string may be encrypted and stored on the ID device in the manner described above with regard to the user/vehicle ID string.

The authentication device may be configured to receive the user/vehicle ID or the user ID and the vehicle ID from the ID device. The authentication device may receive an ID over wired or wireless communications. For wireless communication, a short range radio communication may be used, for example Bluetooth. Alternatively or in addition, an ID may be transmitted by reading the ID from an RFID device in the ID device, e.g. via a modulated radio-frequency signal. As another possibility, the ID may be transmitted by plugging the ID device or a device coupled to the ID device into the authentication device. According to yet another possibility, the transmission may be achieved by pulling a card-shaped portion of the ID device through a card reader. The user of the ID device may select from some or all of the above identified transmission capabilities of the ID device, depending on circumstances.

The authentication device may transmit the user/vehicle ID or the user ID and the vehicle ID together with an authentication request to a verification system. This transmission may be a wireless or wired transmission. For example, an ID/IDs and the authentication request may be transmitted over radio, e.g. over a wireless access network, or for example over a LAN, a WAN or the internet.

The verification system may respond to the authentication request with an authentication response, wherein the authentication response may indicate whether the user/vehicle ID, or the user ID and the vehicle ID has/have been verified by the verification system. The authentication response may be transmitted from the verification system to the authentication device using the same technology that was used when transmitting the authentication request and the ID/IDs to the verification system.

The authentication response may be transmitted from the verification system to the authentication device using the technologies described above. For example, the authentication request and the ID/IDs may be transmitted to the verification system over radio communication, e.g. a wireless access network. The authentication response may be transmitted from the verification system to the authentication device over the same radio communication, e.g. a wireless access network. As such, the same communication technologies may be used in both directions. Alternatively or in addition, the authentication response may be sent over a LAN. Taking different routes for sending/receiving the authentication request/response may add to overall system security, as spying out the communication may thus necessitate spying out different communication channels.

When the authentication request has been verified, i.e. when the user/vehicle ID or the user ID and the vehicle ID has/have been verified, the authentication device may associate access rights or privileges to the user, i.e. the user of the ID device.

According to a further aspect, the authentication device may be part of a charging station. The charging station may for example be a charging station for an electric car (e-car), i.e. a station supplying an e-car with electrical energy. The authentication device may be coupled to a charging station controller and a human machine interface (HMI) in the charging station. Furthermore, the authentication device may be coupled to wireless or wired communication means for communicating with the verification system. For example, the authentication device may be coupled to communication means of the charging station.

The charging station may be configured to charge the vehicle with electrical energy when the authentication device receives the authentication response indicating that the authentication request has been verified. More particularly, the authentication device may signal to the charging station controller that a charging procedure can be started. The charging station controller may then indicate to the user over the human machine interface, e.g. a touch sensitive display, that the charging procedure can be started.

Furthermore, tariff information may be displayed at the human machine interface. The user may then select a charging procedure using the human machine interface. In response, the charging station controller may start charging the e-car according to the selected charging procedure. At the end of the charging procedure, the charging controller may signal the end of the charging procedure to the ID device, e.g. over wired or wireless communication, e.g. a wireless access network. The ID device may indicate the end of the charging procedure to the user of the ID device either visually, acoustically or via haptic feedback. For example, the ID device may comprise a light emitting source such as a light emitting diode (LED) that indicates the end of the charging procedure by changing its color. For example the color may change from red to green to indicate that the charging procedure has finished and the e-car is charged.

According to an aspect, the ID device may comprise a radio frequency identification, RFID, device. As stated above, the RFID device may store an ID string, e.g. a user/vehicle ID string, or a user ID string and a vehicle ID string. The authentication device may read the user/vehicle ID, or the user ID and the vehicle ID from the RFID device. Heretofore, the user may bring the ID device into close proximity to the authentication device. Hence, the authentication device may be attached to the charging station at a location which is close to the human machine interface. For example, the authentication device may not only be coupled to the human machine interface but may be part of the human machine interface in the charging station. In other words, the authentication device may be integrated into the human machine interface.

According to an aspect, the authentication device may be configured to additionally receive a vehicle ID from the vehicle. For example, the vehicle may transmit the vehicle ID over wireless or wired communication means. The vehicle may transmit the vehicle ID directly to the authentication device or the vehicle ID may be routed to the authentication device over other entities. For example, the vehicle may transmit the vehicle ID over radio communications, e.g. Bluetooth. Alternatively or in addition, the vehicle may transmit the vehicle ID over Powerline communications to the charging station. The charging station may then communicate the vehicle ID to the authentication device.

The vehicle ID string may be encrypted. The encrypted vehicle ID string may be encrypted by an entity in the vehicle according to a public key maintained by the authentication device or the verification system. Alternatively or in addition, the vehicle ID string may be stored in a memory in the vehicle in encrypted form. When the vehicle ID string is encrypted by an entity in the vehicle, the entity or the vehicle may request and receive the public key from the charging station, e.g. over radio or Powerline or wireline communications.

The authentication request from the authentication device may be verified or approved only if the vehicle ID from the vehicle and the user/vehicle ID identify the same vehicle. By this, it is assured that the user identified by the user ID charges the car identified by the vehicle ID. When the authentication device determines that the vehicle ID from the vehicle and the user/vehicle ID do not identify the same vehicle, the authentication device may abort the procedure by setting the authentication request into a not verified status, i.e. by setting the user/vehicle ID to the not verified status. Thus, when the authentication device determines, that the vehicle ID from the vehicle and the user/vehicle ID do not identify the same vehicle, the same consequences may occur as when the verification system does not verify the authentication request, i.e. the procedure may be aborted. In other words, when the vehicle ID from the vehicle and the user/vehicle ID string do not identify the same vehicle, the user/vehicle ID or the user ID and the vehicle ID may be not verified.

According to an aspect, the vehicle ID may be transmitted from the vehicle to the authentication device over Powerline or radio or wireline communications. Alternatively or in addition, the vehicle ID could be identified using the license plate of the vehicle or a bar code on the vehicle. Heretofore, the authentication device station may be coupled to license plate reading means or bar code reading means, e.g. an image sensor coupled to logic, the logic being configured to identify symbols of a license plate or a bar code.

Alternatively, the symbols on the license plate may be identified using the license plate reading means and the identified symbols may be compared to the vehicle ID, the vehicle ID being derived from another source than the license plate reading means, e.g. from one of the sources described above. For example, the identified symbols may be compared to the vehicle ID by determining whether the vehicle ID corresponds to the identified symbols, or comprises the identified symbols. Depending on the outcome of the comparison, the authentication request would only be verified if the vehicle ID and the identified symbols correspond or match.

More generally, vehicle IDs may be derived from any two or more different sources as described above and compared to each other, where the authentication request would only be verified if all vehicle IDs correspond or match.

According to an aspect, the authentication device may be configured to transmit a user ID or the user/vehicle ID and a final meter reading from the charging station to a billing system. Alternatively, the authentication device may transmit the user ID or the user/vehicle ID to the charging station controller, which may transmit the user ID, or the user/vehicle ID and a final meter reading from the charging station to the billing system. The transmission may be achieved using wireless or wired communications as described above. The billing system may bill the user for charging the e-car, using the user ID, e.g. the user ID encoded in the user/vehicle ID string. Furthermore, the billing system may receive one or more parameters indicating which charging procedure the user has selected for charging the e-car. In this case, the billing system may take into account the selected billing procedure when billing the user for charging the e-car.

According to an aspect, the verification system may comprise at least a first server and a second server. The first server may be configured to receive the user/vehicle ID, or the user ID and the vehicle ID. The first server may route the user/vehicle ID or the user ID and the vehicle ID together with user information to a corresponding other server, i.e. the second server. The second server may be configured to compare the user/vehicle ID, or the user ID and/or the vehicle ID with entries in a database and configured to transmit the authentication response to the authentication device. The authentication response may indicate whether the user/vehicle ID, or the user ID and/or the vehicle ID match an entry in the database.

According to an aspect, the authentication device may be part of an access means, e.g. a gate. The gate may control access to an area with restricted access for the vehicle. E.g., the gate may restrict entry to or exit of a parking area. Alternatively or in addition, the gate may restrict entry to or exit of a vehicle test area at a company site.

According to an aspect, the verification system may be configured to check whether the user of the vehicle identified by the user/vehicle ID or the user ID is allowed to pass the gate. For example, the user may be allowed to pass the gate only with a specific vehicle. The specific vehicle may be identified by a further vehicle ID which may be transmitted from the vehicle to the authentication device over wireless or wired communications, e.g. radio communications such as Bluetooth.

According to an aspect, the ID device may be a car key comprising an RFID transponder.

According to an aspect, the RFID device, i.e. the RFID transponder may comprise the user/vehicle ID string or the user ID string and the vehicle ID string and the user/vehicle ID. The user ID and the vehicle ID may be encrypted and may comprise a digital signature.

According to an aspect of the description, there is disclosed a method for authenticating a person and an entity, wherein the person has a relation to the entity. The method may comprise the step of transmitting, by an ID device, information identifying the person and the entity, e.g. a person ID and an entity ID or a person/entity ID, to an authentication device. The person ID and the entity ID or the person/entity ID string may be adapted to identify the person and the entity. When the person ID and the entity ID or the person/entity ID has/have been verified, the authentication device may associate access rights, privileges and/or user settings to the person.

As recited above, the entity may be a vehicle and the person may be a user of the vehicle.

Accordingly, there is disclosed a method for authenticating a user of a vehicle. The method may comprise the step of transmitting, by an ID device, a user/vehicle ID, or a user ID and a vehicle ID to an authentication device. The user/vehicle ID, or the user ID and the vehicle ID may identify the user of the vehicle and/or the vehicle. The user/vehicle ID, or the user ID and the vehicle ID may be permanent or partially permanent. For example, the vehicle ID may be permanent, but the user ID may be changeable. The user ID may be changeable by an entity outside the ID device. Said entity may encrypt the user ID and store the encrypted user ID on the ID device in encrypted form, for example as part of the user/vehicle ID string. Alternatively or in addition, the vehicle ID may be changeable by the entity and the user ID may be permanent.

The method may comprise the step of routing, by the authentication device, the user/vehicle ID or the user ID and the vehicle ID together with an authentication request to a verification system. The method may comprise the step of receiving, by the authentication device, an authentication response, wherein the authentication response may indicate whether the authentication request has been verified, i.e. whether the user/vehicle ID or the user ID and the vehicle ID have/has been verified. Furthermore, the method may comprise the step of associating access rights, privileges and/or user settings to the user of the ID device, when the user/vehicle ID or the user ID and the vehicle ID has/have been verified.

According to an aspect, the user/vehicle ID string, or the user ID string and the vehicle ID string may be encrypted by a public key maintained by the authentication device and/or the verification system.

The method may comprise the additional step of decrypting, by the authentication device or the verification system, the user/vehicle ID string, using a private key maintained by the authentication device or the verification system. In addition, the method may comprise the steps of charging the vehicle if the authentication request has been verified, granting access if the authentication request has been verified, granting privileges if the authentication request has been verified, or determining, by a toll collect system, the route of the vehicle if authentication request has been verified.

The method may further comprise the step of receiving, by the authentication device, a further vehicle ID from the vehicle over radio or Powerline communications, the further vehicle ID identifying the vehicle. The authentication response may indicate that the authentication request has been verified or approved, subject to determining that the further vehicle ID and the vehicle ID from the ID device identify the same

It should be noted that the above mentioned aspects may be combined with one another or extracted from one another in various ways. In particular, all possible claim and feature combinations are considered to be disclosed by the present document. Furthermore, the aspects and features outlined in relation with a system are equally applicable in relation to the corresponding method.

An allocation of the above recited aspects with credit cards or other payment methods will offer a large range of payment applications, e.g. e-car charging, toll collect, parking ticket or other speed tickets, and/or rent car mileage pricing. Furthermore, the identification principles described herein can be used for controlling access to certain areas of business premises.

The methods and systems outlined herein combine a low hardware effort with high flexibility, safety and security. An additional degree of security may be achieved by combining car and personal identification. As a result, e-car theft may be discouraged because the charging of the e-car would require both identification codes (i.e. both the car and personal identification).

Similarly, a license plate not matching a vehicle identified by a vehicle ID would lead to the authentication request not being verified and thus, an e-car with a license plate that does not match the vehicle ID could not be charged. Alternatively or in addition, a security system could raise an alarm, indicating that the license plate does not match the vehicle ID.

By allowing for a dynamic amendment of identification codes, the concepts outlined herein are characterized by a high degree of flexibility going along with convenience. As the methods and systems described in the present document do not involve an additional dedicated device, the methods and systems are comfortable and safe for the customer who needs not to care about another chip card, transponder, etc. Moreover, the methods and systems can be realized at low implementation costs. The possibility of dynamically combining several identification codes allows for a high degree of functional flexibility and safety.

### FIGURES

Some embodiments of apparatus and method in accordance with embodiments of the present invention are now described, by way of example only, and with reference to the accompanying drawings in which:
Figure 1 schematically illustrates a system for authenticating a user of a vehicle in an e-car charging procedure; and
Figure 2 schematically illustrates a system for controlling access to certain areas of business premises.

### DETAILED DESCRIPTION

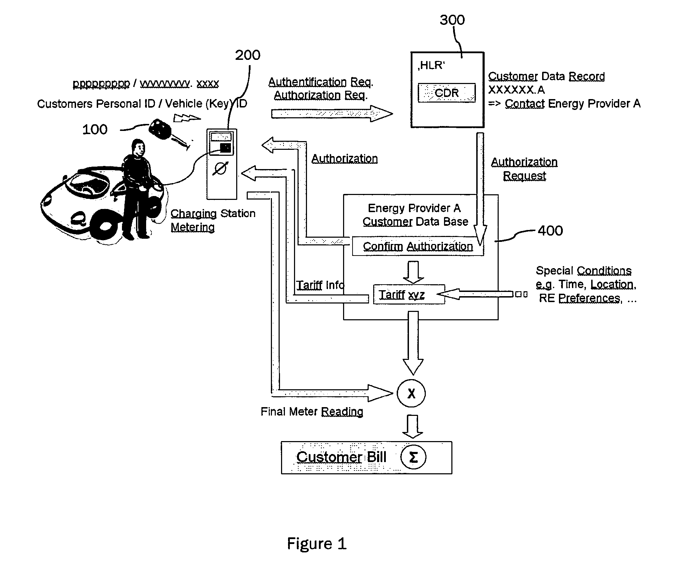

Fig. 1 shows a system for authenticating a user of a vehicle in an e-car charging procedure. The system comprises an ID device (100), a charging station (200), a mobility-operator (300) and an energy provider server (400).

During an e-car charging procedure, the ID device (100) may transmit an identification code (IC) to an authentication device. The authentication device may be part of the charging station (200). The IC may comprise encrypted information. If the IC comprises encrypted information, the authentication device may decrypt the information using a private key maintained by the authentication device or the verification system. From the authentication device, the encrypted or decrypted IC may be transmitted to the mobility-operator (300).

The ID device (100) may be a car key. The ID device (100) may comprise an RFID device. For example, the RFID device may be a car key transponder. The car key transponder may be brought into close proximity of the charging station (200) so that the charging station (200) can read the IC from the RFID transponder.

The IC may comprise a user ID identifying a user of the ID device (100). The IC may also comprise a vehicle ID, e.g. a vehicle ID uniquely identifying a vehicle to which the ID device (100) is associated.

The user ID may be a code comprising numbers and/or characters. For example, the user ID may comprise a predetermined number (e.g. 9) of symbols and uniquely identify a user of a vehicle. The vehicle ID may be a code that comprises numbers and/or characters. For example, the vehicle ID may, similar to the user ID, comprise a predetermined number (e.g. 9) of symbols and uniquely identify the vehicle.

The IC may comprise a combined user/vehicle ID comprising a sequence of numbers and/or characters which uniquely identifies the user of the vehicle and the vehicle itself. The user/vehicle ID may comprise a checksum. The checksum may be appended to the symbol sequence uniquely identifying the user of the vehicle and the vehicle.

The IC may comprise the user ID, vehicle ID and/or combined user/vehicle ID, which may be stored on the ID device (100), e.g. in the form of ID strings, e.g. a user ID string, a vehicle ID string and/or a combined user/vehicle ID string. The ID strings may comprise the encrypted user, vehicle and/or user/vehicle ID according to a public key. The public key may be maintained by the authentication device or the mobility-operator (300).

If the ID device (100) comprises an RFID device, the ID strings may be stored on the RFID device, so that an ID string can be read from the ID device (100) using an RFID reader, e.g. an RFID reader in the charging station or an RFID reader in the vehicle.

If the ID device (100) is a car key, compatibility with the car locking system may be achieved by a suitable construction or filtering of the IC for the vehicle ID.

The IC stored in the ID device (100) may be permanent or at least partially permanent. For example, the ID device (100) may comprise the vehicle ID, and the driver's personal ID, i.e. the user ID. When renting a car for example, the car rent company may attach the driver's personal ID dynamically to the vehicle ID. This may be achieved by means of a transponder at the car rental desk when handing over the ID device (100), e.g. the car key, to the customer. More particularly, this may be achieved by means of a wireless transponder technology and a writeable persistent memory in the ID device (100). Such a combined code comprising partially permanent data may be used to provide a customer with access to special charging rates and to a dedicated charging infrastructure, and to provide the customer with further access rights and privileges.

Attaching the driver's personal ID dynamically to the vehicle ID does not necessarily mean that the code needs to be represented by a concatenated sequence of individual codes. It might as well be another code word which is generated by means of a known coding algorithm using the individual, separate (e.g. personal and vehicle) code sequences.

Besides the IC, a vehicle identification code (VIC) may be transmitted from the vehicle to the authentication device. The VIC may comprise a vehicle ID as described above, wherein the vehicle ID uniquely identifies the vehicle. The VIC may comprise the vehicle ID in the form of a vehicle ID string. The vehicle ID string may comprise the encrypted vehicle ID according to a public key maintained by the authentication device or the mobility-operator (300).

The VIC may be transmitted over radio communications. If the authentication device is part of the charging station (200), the VIC may be transmitted over Powerline from the vehicle to the authentication device in the charging station (200).

In a similar manner, the IC may be transmitted over Powerline to the authentication device. Heretofore, a device in the vehicle may read the IC from the ID device (100) and transmit the IC over Powerline to the authentication device in the charging station (200). Alternatively, a device in the vehicle may read the IC from the ID device (100) and transmit the IC from the car to the authentication device over radio communications, e.g. over Bluetooth.

If the vehicle ID in the VIC is encrypted, the authentication device may decrypt the vehicle ID.

If the IC comprises a vehicle ID, the authentication device may compare the vehicle ID of the VIC with the vehicle ID of the IC. The authentication device may abort the authentication procedure if the vehicle IDs taken from the IC and the VIC do not match. Alternatively, the authentication device may not compare the vehicle ID of the VIC with the vehicle ID of the IC, but transmit the encrypted or decrypted VIC and/or IC to the mobility-operator (300), i.e. the authentication device may defer the matching of the vehicle IDs to the mobility operator (300).

The mobility-operator (300) to which the IC is transmitted may comprise a data base with a functionality comparable to the home location register (HLR) in mobile communication systems. This data base may comprise a record of the customer ID or the data base may be capable of receiving such a record from another database. Based on the record information, the system may identify the customer's energy provider and/or ID.

If the mobility-operator receives an IC or VIC comprising ID strings with encrypted information, the mobility-operator may decrypt the encrypted information using a private key maintained by the mobility-operator (300).

If the mobility-operator (300) receives a VIC and an IC, each comprising a vehicle ID, the mobility-operator (300) may compare the vehicle ID of the VIC with the vehicle ID of the IC and abort the authentication procedure if the vehicle IDs do not match. If the authentication procedure is aborted, the authentication device receives an authentication response indicating that the authentication request was not verified or approved. If the authentication device receives an authentication response indicating that the authentication request was not verified, the charging station does not start charging the e-car.

The mobility-operator (300) may send the customer ID with an authentication request to the energy provider server (400) maintained by the customer's energy provider. The energy provider server (400) may comprise a customer data base. When the authentication is confirmed, i.e. if the customer ID is found to be valid, an authentication response indicating that the authentication request was verified may be transmitted to the authentication device. If the authentication device receives an authentication response indicating that the authentication request was verified, the charging station (200) may start charging the e-car or schedule to charge the e-car at a time determined by the user of the car over a human machine interface, e.g. by selecting a specific charging procedure.

Additionally, the energy provider server (400) may transmit tariff information to the human machine interface. The human machine interface may guide the user through the charging procedure and display the tariff information. The human machine interface may be part of the charging station (200) or the vehicle.

When the human machine interface is part of the vehicle, the human machine interface may be integrated into the center console of the vehicle. Furthermore, connecting the power cable or the Powerline to the e-car may occur automatically, so that the user of the e-car can initiate the charging process over the human machine interface without leaving the e-car. Alternatively, the e-car may be charged inductively. For example, an inductive charging paddle may automatically be inserted into a receptacle on the vehicle. Thus, the user of the e-car can again initiate the charging process over the human machine interface without leaving the e-car. In this case, the charging paddle may be used for Powerline or other communication. Alternatively, the car may be charged inductively by placing the car over an inductor, e.g. when halting the car at traffic lights or in a parking lot or when driving on specially equipped roads where one or more inductors produce an alternating magnetic field that couples into an inductor at the bottom side of the vehicle. In this case, the vehicle and the authentication device may communicate over radio communication or the communication signal may be modulated upon the alternating magnetic field.

After charging is completed, the final meter reading may be transmitted from the charging station (200) to an entity which bills the customer. The final meter reading may be sent along with the IC to identify the user and the vehicle.

In another scenario, the ID device (100) may be used to gain access to certain business premises.

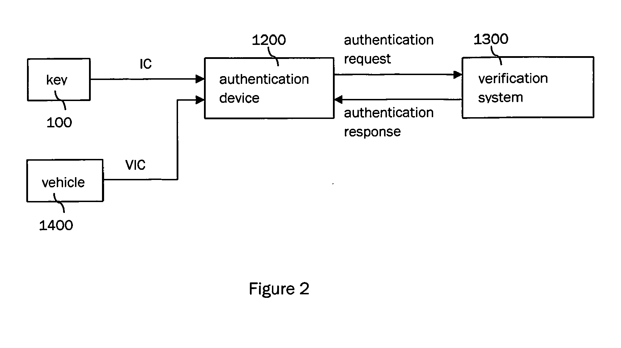

A corresponding system is shown in Fig. 2 which schematically illustrates a system for controlling access to certain areas of business premises of a company which maintains a plurality of vehicles.

In order to control access to certain areas of a business site, an area may only be accessed by passing a gate at an entry point of the area. Similarly, the area may only be left by passing a gate at an exit point of the area. In certain cases, an area may be accessed or exited through one gate.

When a user of a vehicle approaches the gate, the user may have to identify him/her in order to prove that he/she is allowed to access the area. Similarly, a user of a specific vehicle (1400) may have to prove that he/she is allowed to enter or exit the area with the vehicle (1400).

For example, an engineer employed by a car manufacturer may be allowed to test an experimental vehicle during normal work hours and thus, he/she may be allowed to access or leave certain areas at anytime during normal business hours. However, the same test engineer may not be allowed to access certain test areas outside the normal business hours, e.g., because no supervisor is present at the test areas outside the normal business hours. The privilege to test an experimental vehicle in the test areas at any time may be reserved for senior staff members.

Similarly, experimental vehicles may be restricted to be operated solely by senior staff members as the modifications to the vehicle, e.g. a car, have not yet been sufficiently tested and could exhibit dangerous behavior for which special training to operate such cars is required. Thus, the car may be released for testing by non-senior staff members after an initial testing period by senior staff members.

In order to control access to a certain area, e.g. an area for testing experimental vehicles, the user of a vehicle (1400) may identify himself/herself using the ID device (100) described with regard to Fig. 1.

During the access granting procedure, the ID device (100) may transmit the IC to an authentication device (1200). The authentication device (1200) may be part of a gate. The transmission of the IC from the ID device (100) to the authentication device (1200) may comprise reading the IC from the ID device (100) by an IC reader in the vehicle (1400) and transmitting the IC over radio communications, e.g. Bluetooth, to the authentication device (1200). Alternatively, the IC may be read from the ID device (100) by an IC reader coupled to the authentication device (1200), e.g. an RFID reader in the gate.

The authentication device (1200) may also receive the VIC from the vehicle (1400) in the manner described with regard to Figure 1. I.e. transmission of the VIC from the vehicle (1400) to the authentication device (1200) may be achieved over radio communications, e.g. Bluetooth. Alternatively, the authentication device (1200) may be coupled to a VIC reader in the gate, which determines the VIC by optical means, e.g. by reading or scanning the license plate or a bar code on the vehicle (1400).

The authentication device (1200) may then check whether the vehicle identification from the IC matches the vehicle ID from the VIC. As the IC and the VIC may comprise ID strings that comprise the vehicle ID in encrypted form, the authentication device (1200) may decrypt the vehicle ID in the IC and VIC using a private key maintained by the authentication device (1200) or a verification system (1300). If the vehicle ID in the IC and the VIC do not match, the user may not be allowed to pass the gate (1200), i.e. the gate (1200) is kept close. Alternatively, the authentication device (1200) may defer the matching between IC and VIC to the verification system (1300).

When the matching between IC and VIC is deferred to the verification system (1300) or if the matching between the IC and the VIC has succeeded, the authentication device (1200) sends an authentication request including at least the IC to the verification system (1300). If the authentication device (1200) has decrypted the IC or the VIC, the authentication request may include decrypted IDs.

The verification system (1300) may receive the IC. In case the matching between IC and VIC is deferred to the verification system (1300), the verification system (1300) may also receive the VIC. If the IC or the VIC comprises ID strings that comprise the IDs in encrypted form, the verification system (1300) may decrypt the IDs using a private key maintained by the verification system (1300). If the vehicle ID in the IC and the vehicle ID in the VIC do not match, the verification system (1300) sends an authentication response to the authentication device (1200) indicating that the authentication request has not been verified. In case the authentication response to the authentication device indicates that the authentication request has not been verified, the user is not allowed to pass the gate (1200), i.e. the gate (1200) is kept close.

If it is determined that the vehicle IDs match or if the matching between the vehicle IDs has been carried out by the authentication device (1200), the verification system (1300) may search a database coupled to the verification system (1300) or a remote database in order to determine whether the user identified by the user ID is allowed to pass the gate with the vehicle (1400) identified by the vehicle ID. If it is determined that the user is allowed to pass the gate with the vehicle (1400) identified by the vehicle ID, the verification system (1300) sends an authentication response to the authentication device (1200) indicating that the authentication request has been verified. In case the authentication response to the authentication device (1200) indicates that the authentication request has been verified, the user may be allowed to pass the gate with the vehicle (1400), i.e. the gate is opened.

In a similar scenario, the ID device (100) can be used to determine the driving route of a vehicle (1400), as required for example by a toll collect system. Heretofore, the IC and the VIC may be transmitted to an authentication device (1200) as described above. The authentication device (1200), however, may be part of a toll collect station. The authentication device (1200) may authenticate the user and the vehicle (1400) in a similar manner as described above with reference to Figures 1 and 2. However, the authentication response indicating that the authentication request has been verified may be transmitted to an entity that determines using the data from several toll collect stations, which route the vehicle (1400) has been driven by which driver. Thus, tolls can be calculated taking into account route and driver information.

In another similar scenario, the above described procedure for charging an e-car or controlling access to an area could be modified for paying a parking ticket or speed tickets. Then, the user of a vehicle may apply the ID device (100) for identifying himself/herself, e.g. at a parking site, using the authentication device (1200). This user/vehicle ID may be forwarded to a billing system. The billing system may receive the verified user/vehicle ID from the authentication device (1200) and bill the user.

It should be noted that the above principles which have been described with regard to a user of a vehicle may be advantageously employed in other scenarios. Generally speaking, the vehicle could be any entity and the user of the entity could be any person who has a relation with the entity. I.e., a person/entity ID string stored on the ID device (100) could be used to uniquely identify a person and an entity where the person and the entity are in relation to each other, using the authentication device (1200). For example, the person could be a freight carrier and the entity could be the freight. In this example, the relation between the person and the entity would be that the freight carrier carries the freight. Thus, it should be clear to the skilled person that the above examples describe the principle of associating access rights, privileges and/or user settings to a user of a vehicle, but by using the above recited principles, any person having a relation to an entity may be associated access rights, privileges and or user settings with regard to the entity.

Similarly, instead of a person/entity ID string which uniquely identifies a person and an entity where the person and the entity are in relation to each other, a person/group ID string stored on the ID device (100) may uniquely identify a person and a group of persons where the person and the group of persons are in relation to each other, using the authentication device (1200). In this case, each person of the group of persons may be identified over an ID device of that person. When the person/group ID has been verified, the authentication system may associate access rights and privileges to the person and/or the group of persons.

It should be noted that the description and drawings merely illustrate the principles of the proposed methods and systems. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the proposed methods and systems and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Furthermore, it should be noted that steps of various above-described methods and components of described systems can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

In addition, it should be noted that the functions of the various elements described in the present patent document may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

Finally, it should be noted that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. A charging station (200) comprising an authentication device (1200) for authentication of a user of a vehicle (1400), the device adapted to:
- receive information identifying the user and the vehicle (1400) from an identification, ID, device (100) adapted to store the information identifying the user and the vehicle (1400), and
- associate access rights, privileges and/or user settings to the user of the vehicle, if the information identifying the user and the vehicle (1400) has been verified
- wherein the information identifying the user and the vehicle (1400) comprises a user ID and a vehicle ID and wherein the authentication device (1200) is adapted to receive a further vehicle ID from the vehicle (1400) over powerline communications and wherein the user ID and the vehicle ID are verified only if the vehicle ID from the ID device (100) and the further vehicle ID received from the vehicle (1400) identify the same vehicle (1400).

2. The charging station (200) of claim 1, wherein the authentication device (1200) is adapted to:
- transmit the user ID and the vehicle ID together with an authentication request to a verification system (1300), and
- receive an authentication response from the verification system (1300), the authentication response indicating whether the user ID and the vehicle ID have been verified.

3. The charging station (200) of any of claims 1 to 2, wherein the ID device (100) comprises a radio frequency identification, RFID, device, and wherein the authentication device (1200) reads the user ID and the vehicle ID from the RFID device via a modulated radio-frequency signal.

4. The charging station (200) of claim 1, wherein the authentication device (1200) is part of an access means controlling access to an area with restricted access for the vehicle (1400).

5. The charging station (200) of claim 4, wherein the access means is a gate and wherein the verification system is adapted to check whether the user of the vehicle identified by the user ID and the vehicle (1400) identified by the vehicle ID are allowed to pass the gate, the vehicle (1400) being further identified by a further vehicle ID string transmitted from the vehicle (1400) to the authentication device (1200) over radio communication.

6. The charging station (200) according to any one of claims 1 to 5, wherein the charging station (200) is adapted to charge the vehicle when the user ID and the vehicle ID have been verified.

7. The charging station (200) of claim 6, wherein the authentication device (1200) is adapted to transmit the user ID and the vehicle ID and a final meter reading from the charging station (200) to a billing system, the billing system billing the user for charging the e-car.

8. An identification, ID, device (100) for authentication of a user of a vehicle (1400), the device adapted to:
- store information identifying the user and the vehicle (1400); and
- send the information identifying the user and the vehicle (1400) to a charging station (200) comprising an authentication device (1200), wherein the information identifying the user and the vehicle (1400) comprises a user ID and a vehicle ID and wherein the authentication device (1200) is adapted to receive a further vehicle ID from the vehicle (1400) over powerline communications and wherein the user ID and the vehicle ID are verified only if the vehicle ID from the ID device (100) and the further vehicle ID received from the vehicle (1400) identify the same vehicle (1400).

9. The ID device (100) of claim 8, wherein the ID device (100) comprises a radio frequency identification, RFID, device, and wherein the user ID and the vehicle ID from the RFID device is read by the authentication device (1200) via a modulated radio-frequency signal.

10. The ID device (100) of any of claims 8 or 9, wherein the ID device (100) is a car key comprising an RFID device.

11. The ID device (100) of any of claims 9 or 10, wherein the RFID device comprises the user ID and the vehicle ID, the user ID and/or the vehicle ID being encrypted.

12. A method for authenticating a user of a vehicle (1400), the method comprising:
- transmitting, by an identification, ID, device (100), a user ID and a vehicle ID to a charging station (200) comprising an authentication device (1200);
- receiving, by the authentication device (1200), a further vehicle ID from the vehicle (1400) over powerline communications; and
- associating access rights, privileges and/or user settings to the user of the vehicle, if the user ID and the vehicle ID have been verified,
- wherein the user ID and the vehicle ID are verified only if the vehicle ID from the ID device (100) and the further vehicle ID received from the vehicle (1400) identify the same vehicle (1400).

13. The method of claim 12, comprising the additional steps of:
- routing, by the authentication device (1200), the user ID and the vehicle ID together with an authentication request to a verification system (1300);
- receiving, by the authentication device (1200), an authentication response from the verification system (1300), the authentication response indicating whether the user ID and the vehicle ID have been verified and the authentication request allowed.

14. The method of claim 13, wherein the user ID and/or the vehicle ID are encrypted by a public key maintained by the authentication device (1200) and/or the verification system (1300), the method further comprising the step of:
- decrypting, by the authentication device (1200) or the verification system (1300), the user ID and/or the vehicle ID using a private key maintained by the authentication device (1200) or the verification system (1300).

15. The method of claims 13 or 14, comprising at least one of the further steps:
- charging the vehicle (1400) if the user ID and the vehicle ID have been verified;
- granting access if the user ID and the vehicle ID have been verified;
- granting privileges which require authorization if the user ID and the vehicle ID have been verified; or
- determining, by a toll collect system, the route of the vehicle if the user ID and the vehicle ID have been verified.

## Patentansprüche

1. Ladestation (200), umfassend eine Authentifizierungsvorrichtung (1200) für die Authentifizierung eines Benutzers eines Fahrzeugs (1400), wobei die Vorrichtung für Folgendes angepasst ist:
- Empfangen von Informationen, die den Benutzer und das Fahrzeug (1400) identifizieren, von einer ldentifikations-ID-Vorrichtung (100), die angepasst ist, um die Informationen, die den Benutzer und das Fahrzeug (1400) identifizieren, zu speichern, und
- Zuordnen von Zugangsrechten, Privilegien und/oder Benutzereinstellungen zum Benutzer des Fahrzeugs, wenn die Informationen, die den Benutzer und das Fahrzeug (1400) identifizieren, verifiziert wurden,
- wobei die Informationen, die den Benutzer und das Fahrzeug (1400) identifizieren, eine Benutzer-ID und eine Fahrzeug-ID umfassen und wobei die Authentifizierungsvorrichtung (1200) angepasst ist, um eine weitere Fahrzeug-ID von dem Fahrzeug (1400) mittels Datenübertragung über das Stromnetz zu empfangen, und wobei die Benutzer-ID und die Fahrzeug-ID nur verifiziert werden, wenn die Fahrzeug-ID von der ID-Vorrichtung (100) und die weitere Fahrzeug-ID, die von dem Fahrzeug (1400) empfangen wird, das gleiche Fahrzeug (1400) identifizieren.

2. Ladestation (200) nach Anspruch 1, wobei die Authentifizierungsvorrichtung (1200) für Folgendes angepasst ist:
- Übermitteln der Benutzer-ID und der Fahrzeug-ID zusammen mit einer Authentifizierungsanfrage an ein Verifikationssystem (1300), und
- Empfangen einer Authentifizierungsantwort von dem Verifikationssystem (1300), wobei die Authentifizierungsantwort angibt, ob die Benutzer-ID und die Fahrzeug-ID verifiziert wurden.

3. Ladestation (200) nach einem beliebigen der Ansprüche 1 bis 2, wobei die ID-Vorrichtung (100) eine Funkfrequenzidentifikations-RFID-Vorrichtung umfasst, und wobei die Authentifizierungsvorrichtung (1200) die Benutzer-ID und die Fahrzeug-ID von der RFID-Vorrichtung über ein moduliertes Funkfrequenzsignal liest.

4. Ladestation (200) nach Anspruch 1, wobei die Authentifizierungsvorrichtung (1200) Teil eines Zugangsmittels ist, das den Zugang zu einem Bereich mit beschränktem Zugang für das Fahrzeug (1400) steuert.

5. Ladestation (200) nach Anspruch 4, wobei das Zugangsmittel eine Schranke ist, und wobei das Verifikationssystem angepasst ist um zu prüfen, ob der Benutzer des Fahrzeugs, der durch die Benutzer-ID identifiziert wird, und das Fahrzeug (1400), das durch die Fahrzeug-ID identifiziert wird, berechtigt sind, die Schranke zu passieren, wobei das Fahrzeug (1400) weiterhin durch eine weitere ID-Zeichenkette identifiziert wird, die von dem Fahrzeug (1400) an die Authentifizierungsvorrichtung (1200) über Funkkommunikation übermittelt wird.

6. Ladestation (200) nach einem beliebigen der Ansprüche 1 bis 5, wobei die Ladestation (200) angepasst ist, um das Fahrzeug aufzuladen, wenn die Benutzer-ID und die Fahrzeug-ID verifiziert wurden.

7. Ladestation (200) nach Anspruch 6, wobei die Authentifizierungsvorrichtung (1200) angepasst ist, um die Benutzer-ID und die Fahrzeug-ID und einen Endzählerstand von der Ladestation (200) an ein Abrechnungssystem zu übermitteln, wobei das Abrechnungssystem dem Benutzer das Aufladen des Elektroautos in Rechnung stellt.

8. Identifikations-ID-Vorrichtung (100) für die Authentifizierung eines Benutzers eines Fahrzeugs (1400), wobei die Vorrichtung für Folgendes angepasst ist:
- Speichern von Informationen, die den Benutzer und das Fahrzeug (1400) identifizieren, und
- Senden der Informationen, die den Benutzer und das Fahrzeug (1400) identifizieren, an eine Ladestation (200), umfassend eine Authentifizierungsvorrichtung (1200), wobei die Informationen, die den Benutzer und das Fahrzeug (1400) identifizieren, eine Benutzer-ID und eine Fahrzeug-ID umfassen und wobei die Authentifizierungsvorrichtung (1200) angepasst ist, um eine weitere Fahrzeug-ID von dem Fahrzeug (1400) mittels Datenübertragung über das Stromnetz zu empfangen, und wobei die Benutzer-ID und die Fahrzeug-ID nur verifiziert werden, wenn die Fahrzeug-ID von der ID-Vorrichtung (100) und die weitere Fahrzeug-ID, die von dem Fahrzeug (1400) empfangen wird, das gleiche Fahrzeug (1400) identifizieren.

9. ID-Vorrichtung (100) nach Anspruch 8, wobei die ID-Vorrichtung (100) eine Funkfrequenzidentifikations-RFID-Vorrichtung umfasst, und wobei die Benutzer-ID und die Fahrzeug-ID von der RFID-Vorrichtung von der Authentifizierungsvorrichtung (1200) über ein moduliertes Funkfrequenzsignal gelesen werden.

10. ID-Vorrichtung (100) nach einem beliebigen der Ansprüche 8 oder 9, wobei die ID-Vorrichtung (100) ein Autoschlüssel ist, umfassend eine RFID-Vorrichtung.

11. ID-Vorrichtung (100) nach einem beliebigen der Ansprüche 9 oder 10, wobei die RFID-Vorrichtung die Benutzer-ID und die Fahrzeug-ID umfasst, wobei die Benutzer-ID und/oder die Fahrzeug-ID verschlüsselt sind.

12. Verfahren zum Authentifizieren eines Benutzers eines Fahrzeugs (1400), wobei das Verfahren Folgendes umfasst:
- Übermitteln einer Benutzer-ID und einer Fahrzeug-ID, mittels einer Identifikations-ID-Vorrichtung (100), an eine Ladestation (200), umfassend eine Authentifizierungsvorrichtung (1200);
- Empfangen einer weiteren Fahrzeug-ID von dem Fahrzeug (1400) mittels der Authentifizierungsvorrichtung (1200), mittels Datenübertragung über das Stromnetz; und
- Zuordnen von Zugangsrechten, Privilegien und/oder Benutzereinstellungen zum Benutzer des Fahrzeugs, wenn die Benutzer-ID und die Fahrzeug-ID verifiziert wurden,
- wobei die Benutzer-ID und die Fahrzeug-ID nur verifiziert werden, wenn die Fahrzeug-ID von der ID-Vorrichtung (100) und die weitere Fahrzeug-ID, die von dem Fahrzeug (1400) empfangen wird, das gleiche Fahrzeug (1400) identifizieren.

13. Verfahren nach Anspruch 12, umfassend die folgenden zusätzlichen Schritte:
- Routen der Benutzer-ID und der Fahrzeug-ID zusammen mit einer Authentifizierungsanfrage mittels der Authentifizierungsvorrichtung (1200) an ein Verifikationssystem (1300);
- Empfangen einer Authentifizierungsantwort mittels der Authentifizierungsvorrichtung (1200) von dem Verifikationssystem (1300), wobei die Authentifizierungsantwort angibt, ob die Benutzer-ID und die Fahrzeug-ID verifiziert wurden und die Authentifizierungsantwort berechtigt ist.

14. Verfahren nach Anspruch 13, wobei die Benutzer-ID und/oder die Fahrzeug-ID durch einen öffentlichen Schlüssel verschlüsselt sind, der von der Authentifizierungsvorrichtung (1200) und/oder dem Verifikationssystem (1300) gehalten wird, wobei das Verfahren weiterhin folgenden Schritt umfasst:
- Entschlüsseln der Benutzer-ID und/oder der Fahrzeug-ID durch die Authentifizierungsvorrichtung (1200) oder das Verifikationssystem (1300), unter Verwendung eines privaten Schlüssels, der von der Authentifizierungsvorrichtung (1200) und/oder dem Verifikationssystem (1300) gehalten wird.

15. Verfahren nach Anspruch 13 oder 14, umfassend mindestens einen der weiteren Schritte:
- Aufladen des Fahrzeugs (1400), wenn die Benutzer-ID und die Fahrzeug-ID verifiziert wurden;
- Gewähren des Zugangs, wenn die Benutzer-ID und die Fahrzeug-ID verifiziert wurden;
- Gewähren von Privilegien, die eine Berechtigung erfordern, wenn die Benutzer-ID und die Fahrzeug-ID verifiziert wurden; oder
- Ermitteln der Route des Fahrzeugs mittels eines Mautsammelsystems, wenn die Benutzer-ID und die Fahrzeug-ID verifiziert wurden.

## Revendications

1. Station de chargement (200) comprenant un dispositif d'authentification (1200) pour l'authentification d'un utilisateur d'un véhicule (1400), le dispositif étant adapté pour :
- recevoir des informations identifiant l'utilisateur et le véhicule (1400) à partir d'un dispositif d'identification, ID, (100) adapté pour stocker les informations identifiant l'utilisateur et le véhicule (1400), et
- associer des droits d'accès, des privilèges et/ou des réglages d'utilisateur à l'utilisateur du véhicule, si les informations identifiant l'utilisateur et le véhicule (1400) ont été vérifiées
- dans laquelle les informations identifiant l'utilisateur et le véhicule (1400) comprennent une ID d'utilisateur et une ID de véhicule et dans laquelle le dispositif d'authentification (1200) est adapté pour recevoir une autre ID de véhicule provenant du véhicule (1400) par des communications sur courants porteurs et dans laquelle l'ID d'utilisateur et l'ID de véhicule sont vérifiées seulement si l'ID de véhicule provenant du dispositif d'ID (100) et l'autre ID de véhicule provenant du véhicule (1400) identifient le même véhicule (1400).

2. Station de chargement (200) selon la revendication 1, dans laquelle le dispositif d'authentification (1200) est adapté pour :
- transmettre l'ID d'utilisateur et l'ID de véhicule avec une demande d'authentification à un système de vérification (1300), et
- recevoir une réponse d'authentification provenant du système de vérification (1300), la réponse d'authentification indiquant si l'ID d'utilisateur et l'ID de véhicule ont été vérifiées.

3. Station de chargement (200) selon l'une quelconque des revendications 1 à 2, dans laquelle le dispositif d'ID (100) comprend un dispositif d'identification par radiofréquence, RFID, et dans laquelle le dispositif d'authentification (1200) lit l'ID d'utilisateur et l'ID de véhicule à partir du dispositif RFID par l'intermédiaire d'un signal de radiofréquence modulé.

4. Station de chargement (200) selon la revendication 1, dans laquelle le dispositif d'authentification (1200) fait partie d'un moyen d'accès contrôlant l'accès à une zone à accès limité pour le véhicule (1400).

5. Station de chargement (200) selon la revendication 4, dans laquelle le moyen d'accès est un portail et dans laquelle le système de vérification est adapté pour vérifier si l'utilisateur du véhicule identifié par l'ID d'utilisateur et le véhicule (1400) identifié par l'ID de véhicule sont autorisés à passer le portail, le véhicule (1400) étant en outre identifié par une autre chaîne d'ID de véhicule transmise à partir du véhicule (1400) vers le dispositif d'authentification (1200) par communication radio.

6. Station de chargement (200) selon l'une quelconque des revendications 1 à 5, dans laquelle la station de chargement (200) est adaptée pour charger le véhicule lorsque l'ID d'utilisateur et l'ID de véhicule ont été vérifiées.

7. Station de chargement (200) selon la revendication 6, dans laquelle le dispositif d'authentification (1200) est adapté pour transmettre l'ID d'utilisateur et l'ID de véhicule et un relevé de compteur final à partir de la station de chargement (200) vers un système de facturation, le système de facturation facturant l'utilisateur pour le chargement de la voiture électrique.

8. Dispositif d'identification, ID, (100) pour l'authentification d'un utilisateur d'un véhicule (1400), le dispositif étant adapté pour :
- stocker des informations identifiant l'utilisateur et le véhicule (1400) ; et
- envoyer les informations identifiant l'utilisateur et le véhicule (1400) à une station de chargement (200) comprenant un dispositif d'authentification (1200), les informations identifiant l'utilisateur et le véhicule (1400) comprenant une ID d'utilisateur et une ID de véhicule et le dispositif d'authentification (1200) étant adapté pour recevoir une autre ID de véhicule provenant du véhicule (1400) par des communications sur courants porteurs et l'ID d'utilisateur et l'ID de véhicule étant vérifiées seulement si l'ID de véhicule provenant du dispositif d'ID (100) et l'autre ID de véhicule provenant du véhicule (1400) identifient le même véhicule (1400).

9. Dispositif d'ID (100) selon la revendication 8, le dispositif d'ID (100) comprenant un dispositif d'identification par radiofréquence, RFID, et l'ID d'utilisateur et l'ID de véhicule provenant du dispositif RFID étant lues par le dispositif d'authentification (1200) par l'intermédiaire d'un signal de radiofréquence modulé.

10. Dispositif d'ID (100) selon l'une quelconque des revendications 8 ou 9, le dispositif d'ID (100) étant une clé de contact comprenant un dispositif RFID.

11. Dispositif d'ID (100) selon l'une quelconque des revendications 9 ou 10, dans lequel le dispositif RFID comprend l'ID d'utilisateur et l'ID de véhicule, l'ID d'utilisateur et/ou l'ID de véhicule étant cryptées.

12. Procédé d'authentification d'un utilisateur d'un véhicule (1400), le procédé comprenant les étapes suivantes :
- transmettre, par un dispositif d'identification, ID, (100), une ID d'utilisateur et une ID de véhicule à une station de chargement (200) comprenant un dispositif d'authentification (1200) ;
- recevoir, au moyen du dispositif d'authentification (1200), une autre ID de véhicule provenant du véhicule (1400) par des communications sur courants porteurs ; et
- associer des droits d'accès, des privilèges et/ou des réglages d'utilisateur à l'utilisateur du véhicule, si l'ID d'utilisateur et l'ID de véhicule ont été vérifiées,
- l'ID d'utilisateur et l'ID de véhicule étant vérifiées seulement si l'ID de véhicule provenant du dispositif d'ID (100) et l'autre ID de véhicule provenant du véhicule (1400) identifient le même véhicule (1400).

13. Procédé selon la revendication 12, comprenant les étapes supplémentaires suivantes :
- acheminer, au moyen du dispositif d'authentification (1200), l'ID d'utilisateur et l'ID de véhicule avec une demande d'authentification vers un système de vérification (1300) ;
- recevoir, au moyen du dispositif d'authentification (1200), une réponse d'authentification provenant du système de vérification (1300), la réponse d'authentification indiquant si l'ID d'utilisateur et l'ID de véhicule ont été vérifiées et la demande d'authentification autorisée.

14. Procédé selon la revendication 13, dans lequel l'ID d'utilisateur et/ou l'ID de véhicule sont cryptées par une clé publique conservée par le dispositif d'authentification (1200) et/ou le système de vérification (1300), le procédé comprenant en outre l'étape suivante :
- décrypter, au moyen du dispositif d'authentification (1200) ou du système de vérification (1300), l'ID d'utilisateur et/ou l'ID de véhicule en utilisant une clé privée conservée par le dispositif d'authentification (1200) ou le système de vérification (1300).

15. Procédé selon la revendication 13 ou 14, comprenant au moins une des étapes supplémentaires suivantes :
- charger le véhicule (1400) si l'ID d'utilisateur et l'ID de véhicule ont été vérifiées ;
- accorder l'accès si l'ID d'utilisateur et l'ID de véhicule ont été vérifiées ;
- accorder des privilèges qui requièrent une autorisation si l'ID d'utilisateur et l'ID de véhicule ont été vérifiées ; ou
- déterminer, par un système de perception de péages, le trajet du véhicule si l'ID d'utilisateur et l'ID de véhicule ont été vérifiées.
